# EUROPÄISCHE PATENTSCHRIFT

(11) **EP 0 921 323 B1**
(45) Veröffentlichungstag und Bekanntmachung des Hinweises auf die Patenterteilung: **04.10.2001**
(21) Anmeldenummer: 98110479.7
(22) Anmeldetag: 08.06.1998
(51) Int. Cl.: F16B 5/06, F16B 19/10

(54) **Verbindung zwischen einem Träger insbesondere einem Karosserieteil eines Kraftfahrzeuges, und einem Plattenelement, insbesondere einer Türverkleidung**
Joint between a support, in particular a body part of an automotive vehicle, and a panel, in particular a door trim panel
Joint entre un support, en particulier une pièce de carrosserie automobile, et un panneau, en particulier un panneau de garniture pour portes

(30) Priorität: 03.12.1997 DE 19753678
(43) Veröffentlichungstag der Anmeldung: 09.06.1999
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Schieschke, Klaus, Dipl.-Ing.

(56) Entgegenhaltungen:
- EP-A- 0 726 401
- EP-A- 0 735 283
- DE-C- 4 014 589
- US-A- 4 861 208
- US-A- 5 507 610

## Beschreibung

Die Erfindung bezieht sich auf eine Verbindung zwischen einem Träger, insbesondere einem Karosserieteil eines Kraftfahrzeuges, und einem Plattenelement, insbesondere einer Türverkleidung, bestehend aus einem Verbindungsteil mit einem an dem Plattenelement befestigbaren Oberteil und einem mit dem Träger verbindbaren Unterteil.

Als Stand der Technik ist bereits ein derartiges Verbindungselement bekannt (EP 0 726 401 A1), bei welchem zwei oberhalb einer umlaufenden elastischen Dichtlippe angeordnete Flansche unterschiedliche Elastizität aufweisen. Die beiden Flansche lassen sich seitlich in Taschen eines Eingriffsbereichs des Oberteils einschieben; eine untere Dichtlippe ist in der Lage, den oberen Bereich eines Trägers im montierten Zustand zu beaufschlagen und hierdurch eine annähernd dichte Verbindung herzustellen.

Weiterer Stand der Technik ist ein Element mit einem an einem Plattenelement befestigbaren Oberteil, einem Mittelteil und einem Halteelement (DE 40 14 589 C1). Durch diese Konstruktion ist ein insbesondere in der Kraftfahrzeugindustrie erforderlicher Toleranzausgleich jedoch nur in der parallel zum Träger liegenden Ebene möglich.

Demgegenüber liegt der vorliegenden Erfindung die Aufgabe zugrunde, eine Verbindung der eingangs genannten Art zu schaffen, bei welcher auf einfache Weise ein weiterer und möglichst einen großen Bereich umfassender Toleranzausgleich in einer weiteren Achse des Kraftfahrzeuges ermöglicht wird.

Diese Aufgabe wird erfindungsgemäß dadurch gelöst, dass zwischen dem Oberteil und dem Untereil ein mit Verrastungselementen versehener, halsförmig ausgebildeter Zwischenbereich vorgesehen ist, dass ein in eine Trägeröffnung einlagerbares Eingriffsteil vorgesehen ist, das in seinem vorderen Bereich der Zwischenbereich des Verbindungsteils durchsetzt und hinter der Türöffnung spreizt, und dass das Eingriffsteil mit mindestens einer in die Verrastungselemente einlagerbaren Gegenrast versehen ist.

Durch das Zusammenwirken der Verrastungselemente des halsförmig ausgebildeten Zwischenbereichs und der Gegenrasten ergibt sich vorteilhafterweise ein Toleranzausgleich über einen großen Bereich über die sog. Y-Achse eines Kraftfahrzeuges, d.h. die quer zur Fahrtrichtung liegende Achse, beispielsweise von der Fahrertür zur Beifahrertür. Dadurch, dass der Zwischenbereich im vorderen Teil das Eingriffsteil durchsetzt und hinter der Türöffnung spreizt, ist außerdem eine sichere und abgedichtete Befestigung des Verbindungsteils an dem Träger gewährleistet.

In weiterer Ausgestaltung der Erfindung kann das Eingriffsteil ein Zweikomponententeil sein und aus einem aus hartem Material bestehenden, mit der Gegenrast versehenem Halteelement und aus einem aus weicherem Material bestehenden Lagerelement gebildet sein. Beide Materialien sind Kunststoffprodukte, beispielsweise das harte Material aus PA, während das weiche Material TPE sein kann. Damit ist vorteilhafterweise nur eine niedrigere Eindruckkraft erforderlich, um das Zwischenteil in das Eingriffsteil einzulagern und hier neben einem Toleranzausgleich eine sichere Abdichtung zu gewährleisten. Dadurch, dass sich die Gegenrasten in den Verrastungselementen einlagern, liegt vorteilhafterweise eine hohe Abzugskraft vor, so dass sich insgesamt ein sehr wirkungsvolles Element ergibt.

Nach einem anderen Merkmal der Erfindung kann das Halteelement zumindest teilweise in das Lagerelement eingebettet sein und beispielsweise mindestens einen Steg aufweisen, welcher sich in das aus weicherem Material bestehende Lagerelement einlagert.

Gestaltet man die vorherige Ausführungsform weiter, so besteht die Möglichkeit, dass das Halteelement vier einander gegenüberliegende Stege aufweist, an welche oberhalb ein kreuzförmig ausgebildeter in das Lagerelement eingebetteter Abschlussbereich anschließt, welcher innenseitig mit mindestens zwei Gegenrasten versehen ist. Diese Gegenrasten können sich jeweils in den Bereichen zwischen zwei Kreuzbalken befinden, so dass beispielsweise vier Gegenrasten vorliegen, die sich in eines der Verrastungselemente einlagern können.

Der Zwischenbereich kann nach einem anderen Merkmal der Erfindung stirnseitig als Zylinder augebildet sein, welcher sich zwischen mindestens zwei federnden Führungsflügeln und einem die Innenwandung des Eingriffsteils beaufschlagenden Konus befindet. Die Führungsflügel können hierbei das Eingriffsteil überragen und bewirken somit eine gute Montagehilfe beim Einsetzen des erfindungsgemäßen Verbindungselementes in die Trägeröffnung.

Nach einem anderen Merkmal der Erfindung kann das mit den Gegenrasten versehene Halteelement eine umlaufende, innere Ausnehmung aufweisen, in welche das Lagerelement eingelagert ist. Weiterhin besteht die Möglichkeit, dass sich oberhalb der Ausnehmung die federnden Gegenrasten befinden, welche beispielsweise an Stegen angeordnet sind. Hierbei können sich mehrere Stege einander diagonal gegenüberliegen.

In weiterer Ausgestaltung der Erfindung kann das Lagerelement aus einem in die Ausnehmung eingelagerten Ring und einem damit verbundenen Spreizelement bestehen, wobei dieses Spreizelement ringförmig ausgebildet sein kann. Das Spreizelement kann vor der Endmontage an dem Träger in einer Nut des Zwischenbereichs eingelagert sein und behindert nicht den Montagevorgang, d.h. das Einsetzen der erfindungsgemäßen Verbindung in eine Trägeröffnung. Erst wenn unter Druckeinwirkung das Zwischenteil in das Eingriffsteil eingepresst wird, tritt das Spreizelement aus der Nut heraus und lagert sich in gespreizter Form hinter der Trägeröffnung ein. Da das Lagerelement aus weicherem Material besteht, ist damit insgesamt eine sehr gute Dichtwirkung gewährleistet.

Die innere Ausnehmung des Halteelements kann in weiterer Ausgestaltung umgekehrt U-förmig ausgebildet sein und an der dem Zwischenbereich zugekehrten Seite einen die Trägeröffnung durchdringenden Schenkel aufweisen. Die Stirnseite dieses Schenkels kann sich gemeinsam mit dem Spreizelement in die Nut des Zwischenbereichs einlagern. Weiterhin besteht die Möglichkeit, dass die Stirnseite des Schenkels in eine umlaufende Ausnehmung des Spreizelements eingelagert ist.

Hierbei kann beispielsweise an die Nut des Zwischenbereichs stirnseitig ein Führungskonus anschließen, welcher beispielsweise im Querschnitt kreuzförmig ausgebildet ist. Auch hierdurch ergibt sich ein leichtes Einführen des erfindungsgemäßen Verbindungselementes in eine Trägeröffnung.

Nach einem anderen Merkmal der Erfindung kann das Halteelement einen Profilbereich aufweisen, welcher in das Lagerelement eingebettet ist.

Alternativ besteht die Möglichkeit, dass das Halteelement als zumindest teilweise in das Lagerelement eingebetteter Ring ausgebildet ist, wobei mindestens ein das Lagerelement überragender Bereich gleichzeitig die Gegenrast bildet.

In weiterer Ausgestaltung der Erfindung besteht die Möglichkeit, dass das Oberteil der Verbindung einen Zwischenbereich aufweist, welcher am Außenumfang längsverlaufende Stege besitzt, die stirnseitig mit mindestens einem Verrastungselement versehen sind. Das Unterteil kann oberseitig eines Dichtflansches mit einem Gehäuse ausgestattet sein, dessen Ausnehmung auf den Querschnitt der Stege des Oberteils abgestellt und innenseitig mit mindestens einer Gegenrast zum Eingriff in das Verrastungselement des Oberteils versehen ist. Es können sich jeweils zwei Stege einander diagonal gegenüberliegen, wobei die Stege verschiedene Breite aufweisen können. Auch ein einzelner Steg kann verschiedene Breiten besitzen, wobei vorzugsweise im Stegbereich größerer Breite die Verrastungselemente angeordnet sind.

Nach einem anderen Merkmal der Erfindung können die Stege endseitig durch einen konisch zulaufenden Einschubbereich begrenzt sein. Dieser Einschubbereich kann beispielsweise mit mindestens zwei diagonal einander gegenüberliegenden, federnden Rastnasen versehen sein.

Nach einem weiteren Merkmal der Erfindung kann der Zwischenbereich zwischen den Stegen und dem Einschubbereich eine Einschnürung aufweisen.

Das Gehäuse des Oberteils kann mindestens einen mit der Ausnehmung verbundenen längsverlaufenden Schlitz besitzen, wobei vorzugsweise mehrere Schlitze an mindestens einer Fläche und/oder an mindestens einer Seitenkante des Gehäuses verlaufen können.

In weiterer Ausgestaltung der Erfindung kann das Unterteil ein Zwei-Komponententeil sein und aus einem aus hartem Material bestehenden Bereich mit dem Gehäuse und einem oberen Teil des Dichtungsflansches und aus einem aus weicherem Material bestehenden Bereich mit einem unteren Teil des Dichtflansches und mindestens einem sich durch die Trägeröffnung erstreckenden Spreizelement gebildet sein. Die Spreizelemente können durch den Zwischenbereich des Oberteils hinter der Trägeröffnung aufweitbar sein.

Nach einem anderen Merkmal der Erfindung kann der aus weicherem Material bestehende Bereich unterhalb des Dichtflansches mindestens zwei Rasten aufweisen, welche in die Einschnürung des Zwischenbereiches einlagerbar und nach Einschubbewegung des Oberteils in das Unterteil hinter der Trägeröffnung durch schräge Flächen oberhalb der Einschnürung spreizbar sind.

Nach einer anderen Gestaltung der Erfindung kann das Unterteil oberhalb eines Dichtungsflansches mehrere einander gegenüberliegende Stege aufweisen, welche innenseitig mit den in die Verrastungselemente des Zwischenbereichs eingreifbaren Gegenrasten versehen sind.

Alternativ kann nach einer anderen Ausführungsform der Erfindung das Unterteil ein Zwei-Komponententeil sein und aus einem aus hartem Material bestehenden Bereich mit den Stegen, einem oberen Teil des Dichtflansches und sich durch die Trägeröffnung erstreckenden Spreizelementen und aus einem aus weicherem Material bestehenden Bereich mit einem unteren Teil des Dichtflansches gebildet sein.

Nach einer anderen Ausgestaltung der Erfindung besteht auch die Möglichkeit, dass das Unterteil zwischen zwei Bereichen aus hartem Material einen Bereich aus weicheren Material aufweist, welcher mit einer umlaufenden Dichtlippe versehen ist.

Das Oberteil kann oberhalb des Zwischenbereichs die verschiedensten Gestaltungen besitzen, beispielsweise mit mindestens einer Rohrleitung versehen sein, mit Kabelklemmbereichen und/oder mit Halteelementen.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1: eine Seitenansicht einer ersten Ausführungsform der Erfindung kurz nach dem Einsetzen in eine Trägeröffnung;
- Fig. 2: eine Draufsicht auf die Ausführungsform nach Fig. 1;
- Fig. 3: einen Schnitt gemäß der Linie III-III in Fig. 2;
- Fig. 4: einen Schnitt durch die erfindungsgemäße Verbindung im Endzustand, teils gebrochen;
- Fig. 5: eine perspektivische Teilansicht einer Ausführungsform des Halteelements;
- Fig. 6: eine Draufsicht auf das Halteelement nach Fig. 5;
- Fig. 7: eine perspektivische Teilansicht einer Ausführungsform des Zwischenbereichs;
- Fig. 8: eine Draufsicht auf den Zwischenbereich gemäß Fig. 7;
- Fig. 9: eine weitere Ausführungsmöglichkeit der Erfindung in Seitenansicht;
- Fig. 10: einen Teilschnitt durch die Ausführungsform nach Fig. 9 nach Einführen in eine Trägeröffnung;
- Fig. 11: eine weitere Ausführungsform der Erfindung im Mittelschnitt, teils gebrochen, nach Einsetzen in eine Trägeröffnung;
- Fig. 12 und Fig. 13: weitere Ausführungsmöglichkeiten der Erfindung im Mittelschnitt, teils gebrochen, nach Endmontage;
- Fig. 14: die Ausführungsmöglichkeit nach Fig. 13 in Seitenansicht;
- Fig. 15: einen Schnitt durch die Ausführungsform nach Fig. 13 und 14 in der Vormontage;
- Fig. 16: eine perspektivische Ansicht eines Oberteils einer weiteren Ausführungsform der Erfindung;
- Fig. 17: einen Schnitt durch das zum Oberteil nach Fig. 16 gehörende Unterteil;
- Fig. 18: eine perspektivische Ansicht des Unterteils nach Fig. 17;
- Fig. 19: eine perspektivische Darstellung von Ober- und Unterteil gemäß Fig. 16 und 17;
- Fig. 20: einen Mittelschnitt durch das Oberteil und das Unterteil nach Fig. 19;
- Fig. 21: eine Seitenansicht der erfindungsgemäßen Verbindung nach Fig. 16 bis 20 in montierter Endstellung;
- Fig. 22: ein Schnitt nach der Linie XXII-XXII nach Fig. 21;
- Fig. 23: eine andere Ausführungsform des Oberteils in Seitenansicht;
- Fig. 24: eine um 90° gedrehte Darstellung des Oberteils nach Fig. 23;
- Fig. 25: eine Draufsicht auf das Unterteil zur Aufnahme des Oberteils nach Fig. 23 bzw. 24;
- Fig. 26: eine Seitenansicht des Unterteils gemäß Fig. 25;
- Fig. 27: einen Schnitt nach der Linie XXVII-XXVII in Fig. 25;
- Fig. 28: einen Schnitt nach der Linie XXVIII-XXVIII nach Fig. 25;
- Fig. 29: die montierte Einheit, bestehend aus Oberteil und Unterteil gemäß den Fig. 23 bis 28 in Seitenansicht nach Einsetzen in eine Trägeröffnung;
- Fig. 30: einen Schnitt nach der Linie XXX-XXX nach Fig. 29;
- Fig. 31: eine perspektivische Ansicht der montierten Einheit nach Fig. 29 und 30;
- Fig. 32: eine weitere Seitenansicht der Einheit nach Fig. 29 bis 31 in montierter Endstellung;
- Fig. 33: einen Schnitt nach der Linie XXXIII-XXXIII nach Fig. 32;
- Fig. 34: eine perspektivische Ansicht der zusammengebauten Einheit in einer Trägeröffnung nach Fig. 32 und 33;
- Fig. 35: eine weitere Ausführungsform der Erfindung im Mittelschnitt nach Einsetzen in eine Trägeröffnung;
- Fig. 36: eine Draufsicht auf die Ausführungsform nach Fig. 35;
- Fig. 37: eine perspektivische Darstellung des Unterteils der Bauform nach Fig. 35 und 36;
- Fig. 38: einen Schnitt durch das Unterteil nach Fig. 37;
- Fig. 39: einen Schnitt durch das Unterteil gemäß Fig. 36 in anderer Darstellung;
- Fig. 40: eine weitere Ausführungsform der Erfindung in zusammengebauter Form im Mittelschnitt;
- Fig. 41: eine perspektivische Ansicht der Ausführungsform nach Fig. 40;
- Fig. 42a bis 42e: verschiedene Ausführungsformen der Erfindung im Mittelschnitt, bezüglich der Gestaltung des Oberteils (die Figuren 42b-42e zeigen wegen der fehlenden Plattenverbindung keine Ausführungen gemäß der Erfindung nach Anspruch 1).

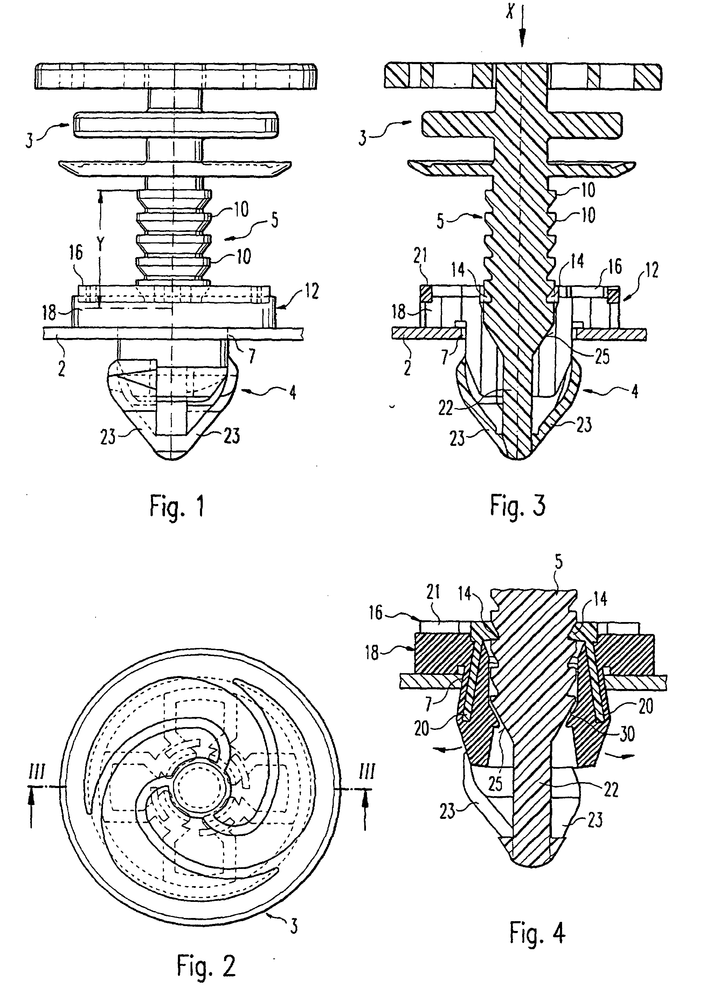

Fig. 1 zeigt eine Verbindung 1 in einer ersten Ausführungsform zwischen einem Träger 2, insbesondere einem Karosserieteil eines Kraftfahrzeuges, und einem nicht näher dargestellten Plattenelement, insbesondere einer Türverkleidung. Diese Verbindung 1 weist ein Verbindungsteil mit einem an dem Plattenelement befestigbaren Oberteil 3 und einem mit dem Träger 2 verbindbaren Unterteil 4 auf.

Das Oberteil 3 kann beliebig gestaltet sein. Im vorliegenden Ausführungsbeispiel weist es drei Flansche auf, wobei der obere Flansch nach Fig. 2 spiralförmig verlaufende Rippen besitzen kann.

Wie aus Fig. 1 und 3 ersichtlich, befindet sich zwischen dem Oberteil 3 und dem Unterteil 4 ein mit Verrastungselementen 10 versehener, halsförmig ausgebildeter Zwischenbereich 5. Die Verrastungselemente 10 können beispielsweise umlaufende Ringe, sägezahnförmige Gewindebereiche oder ähnliche hakenartige Gebilde sein.

Aus Fig. 3 ist ersichtlich, dass der Zwischenbereich 5 ein in eine Trägeröffnung 7 einlagerbares Eingriffsteil 12 im vorderen Bereich durchsetzt und hinter der Trägeröffnung 7 spreizt. Der Endzustand ist hier in schematischem Schnitt in Fig. 4 dargestellt. Aus Fig. 3 und 4 ist weiterhin ersichtlich, dass das Eingriffsteil 12 mit mindestens einer in die Verrastungselemente 10 einlagerbaren Gegenrast 14 versehen ist.

Das insbesondere in Fig. 3 und 4 im Schnitt dargestellte Eingriffsteil 12 ist vorteilhafterweise ein Zweikomponententeil. Es ist beispielsweise aus einem aus hartem Kunststoffmaterial bestehenden, mit der Gegenrast 14 versehenen Halteelement 16 und aus einem aus weicherem Kunststoffmaterial bestehenden Lagerelement 18 gebildet.

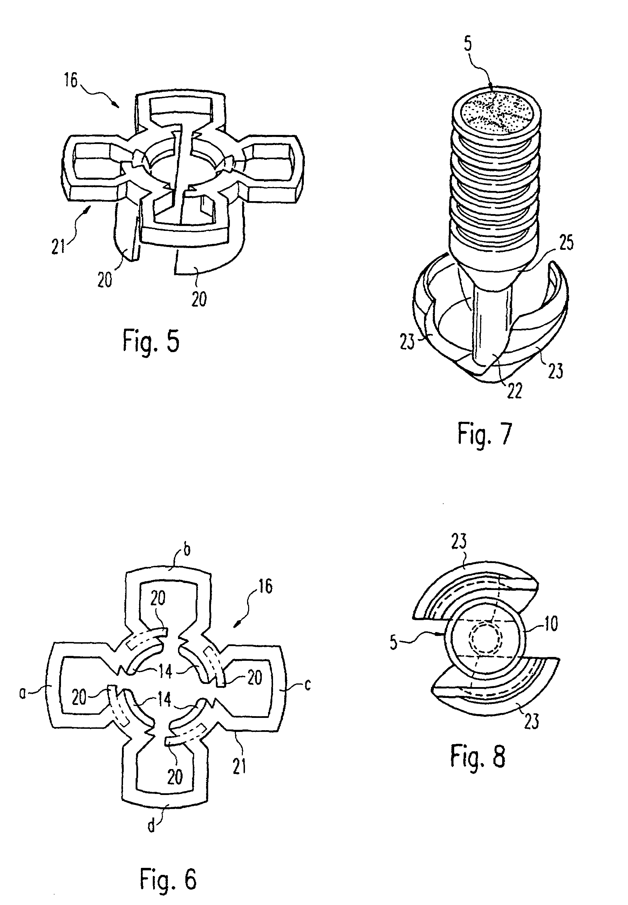

Das Halteelement 16, wie es in einer ersten Ausführungsform in Fig. 5 und 6 dargestellt ist, kann beispielsweise vier diagonal einander gegenüberliegende Stege 20 aufweisen, welche in das Lagerelement 18 nach Fig. 4 eingebettet sind. An diese Stege 20 kann sich oberhalb ein kreuzförmig ausgebildeter Abschlussbereich 21 nach Fig. 5 anschließen, welcher innenseitig mit den Gegenrasten 14 versehen ist. Diese Gegenrasten 14 können sich, wie in insbesondere aus Fig. 5 und 6 hervorgeht, jeweils in den Bereichen zwischen zwei Kreuzbalken a, b, c und d befinden. Diese Kreuzbalken können in Form von dünnen Stegen ausgebildet sein, und somit eine gewisse Elastizität besitzen. Die Stege können nach Fig. 6 in den Raum zwischen den Kreuzbalken ragen.

Dieses so gebildete Halteelement 16 ist gemäß Fig. 3 und 4 weitgehend in das aus weicherem Material bestehende Lagerelement 18 eingebettet.

Aus Fig. 7 und 8 geht hervor, dass der Zwischenbereich 5 beispielsweise stirnseitig als Zylinder 22 ausgebildet ist, welcher sich zwischen mindestens zwei federnden Führungsflügeln 23 und einem die Innenwandung 30 des Eingriffsteils beaufschlagenden Konus 25 befindet. Aus Fig. 4 ist in diesem Zusammenhang ersichtlich, dass die Führungsflügel 23 das Eingriffsteil 12 überragen. Diese beiden federnden Führungsflügel stellen damit eine Montagehilfe dar, um beispielsweise gemäß Fig. 1 die erfindungsgemäße Verbindung in eine Trägeröffnung 7 einzuführen. Nach Fig. 8 können sich die beiden Führungsflügel 23 diagonal gegenüberliegen. Es können jedoch beispielsweise auch mehrere Führungsflügel Anwendung finden, welche durch Schlitze voneinander getrennt sind. Vorzugsweise weisen diese Führungsflügel schräg verlaufende Rampen auf, um das Einführen in die Trägeröffnung zu erleichtern.

Beim Eindrücken der Verbindung 1 in die Trägeröffnung 7 beaufschlagen die Flügel 23 den unteren Bereich des aus weicherem Material bestehenden Lagerelements 18 und komprimieren diesen. Hierdurch ergibt sich eine gute Montage in der Trägeröffnung 7. Wenn die Position nach Fig. 3 erreicht ist, spreizen sich die elastischen Flügel 23. Es besteht nunmehr die Möglicheit, durch Druck in Pfeilrichtung X nach Fig. 3 den Konus 25 so durch die Trägeröffnung zu bewegen, dass das Eingriffsteil 12, bestehend aus Halteelement 16 und Lagerelement 18, gespreizt wird und sich im vorderen Bereich hinter die Öffnung 7 des Trägers 2 klemmt (Fig. 4). Gleichzeitig lagern sich die Gegenrasten 14 des aus hartem Material bestehenden Halteelements des Eingriffsteils 12 in die entsprechenden Verrastungselemente 10 ein, und zwar innerhalb eines Toleranzbereichs y gemäß Fig. 1. Damit ist insgesamt in Y-Richtung ein guter Toleranzausgleich zwischen dem Träger 2 und einem nicht näher dargestellten Plattenelement möglich.

Dieses Plattenelement kann sich in das beispielsweise nach Fig. 2 aus drei Scheiben bestehende Oberteil 3 über nicht näher dargestellte Taschen einlagern und somit eine sichere Verbindung zum Träger 2 in funktionsrichtiger Lage gewährleisten.

Dadurch, dass das aus weicherem Material bestehende Halteelement 18 die Trägeröffnung 7 gemäß Fig. 4 voll durchsetzt und sich davor bzw. dahinter einlagert, ist weiterhin auf einfache Weise ein wasserdichter Abschluss der Trägeröffnung 7 gewährleistet.

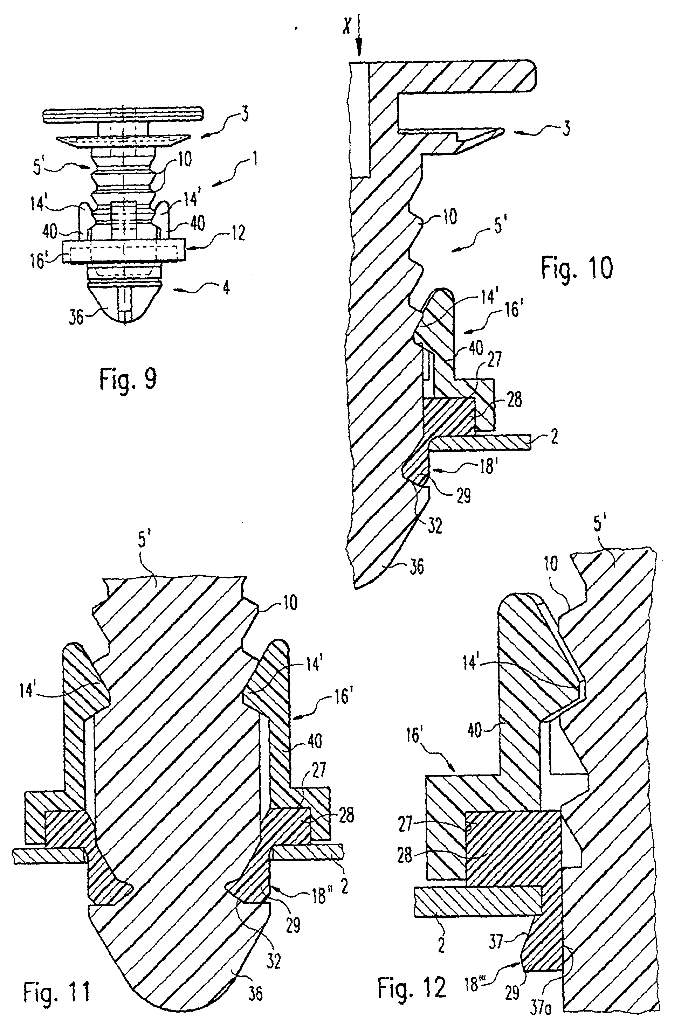

Fig. 9 und 10 zeigen eine weitere Ausführungsform der Erfindung. Hierbei geht insbesondere aus Fig. 10 hervor, dass das mit den Gegenrasten 14' versehene Halteelement 16' eine umlaufende, innere Ausnehmung 27 aufweist. In dieser Ausnehmung 27 lagert sich das Lagerelement 18' ein, welches beispielsweise aus einem Ring 28 und einem damit verbundenen Spreizelement 29 besteht. Das Spreizelement 29 kann hierbei ringförmig ausgebildet sein und vor der Endmontage an dem Träger 2 in einer Nut 32 des Zwischenbereichs 5' eingelagert sein.

Weiterhin ist erkennbar, dass sich oberhalb der Ausnehmung 27 die federnden Gegenrasten 14' befinden, welche an Stegen 40 angeordnet sind. Diese Stege 40 können sich nach Fig. 9 diagonal gegenüberliegen.

Aus Fig. 9 und 10 geht hervor, dass sich an die Nut 32 des Zwischenbereichs 5' stirnseitig ein Führungskonus 36 anschließt, welcher beispielsweise im Querschnitt kreuzförmig ausgebildet ist und somit eine Führungshilfe bei der Montage, d.h. beim Einsetzen in eine Trägeröffnung bietet.

Wird gemäß Fig. 10 wiederum in Pfeilrichtung X nach Einsetzen der erfindungsgemäßen Verbindung in eine Trägeröffnung ein Druck aufgebracht, so verrasten die Gegenrasten 14' in funktionsrichtiger Lage in Y-Richtung, wobei gleichzeitig das Spreizelement 29 aus der Nut 32 heraustritt und sich hinter der Trägeröffnung 7 in gespreizter Form einlagert.

Fig. 11 stellt eine weitere Ausführungsform der Erfindung dar: Wie ersichtlich, ist hier insbesondere das Spreizelement konstruktiv etwas anders gestaltet und greift insgesamt großvolumiger in eine Nut 32 des Zwischenbereichs 5'.

Fig. 12 zeigt eine weitere Ausführungsform der Erfindung: Hier ist keine Nut 32 vorgesehen, sondern das Spreizelement 29 weist zwei im Winkel zueinanderstehende Flächen 37 und 37a auf, wodurch nach Eindrücken des Zwischenteils 5' wiederum ein Spreizen des Lagerelements 18''' erfolgt.

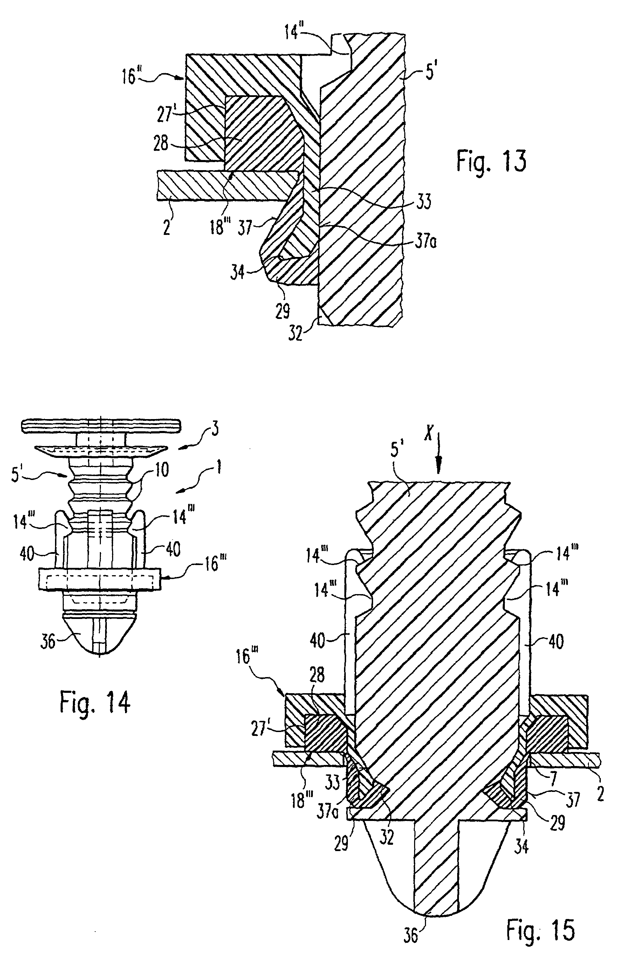

Bei der Ausführungsform gemäß Fig. 13 bis 15 besteht die Möglichkeit, dass die innere Ausnehmung 27' des Halteelements 16'' umgekehrt U-förmig ausgebildet ist und an der dem Zwischenbereich 5' zugekehrten Seite einen die Trägeröffnung 7 durchdringenden Schenkel 33 aufweist. Hierbei kann sich die Stirnseite des Schenkels 33 in eine Ausnehmung 34 des Spreizelements 29 einlagern.

Wiederum sind analog der Ausführungsform nach Fig. 12 zwei im Winkel zueinander stehende Flächen 37 und 37a vorhanden, woraus ein Spreizvorgang resultiert, welcher zu einem Endmontagezustand gemäß Fig. 13 führt.

Fig. 14 zeigt, dass das Halteelement 16''' wiederum federnde Gegenrasten 14''' aufweist, welche sich an Stegen 40 befinden. Wird nun diese Verbindung 1 nach Fig. 15 in der Trägeröffnung montiert, so verbleiben zunächst der Schenkel 33 und das Spreizelement 29 in der Nut 32, so dass sich ein gutes Einführen bei der Vormontage ergibt.

Nunmehr kann in Pfeilrichtung X Druck auf das Zwischenteil 5' ausgeübt werden, wordurch der Schenkel 33 und das Spreizelement aus der Nut 32 heraustreten und sich ein Endmontagezustand nach Fig. 13 ergibt.

In nicht näher dargestellter Ausführungsform besteht auch die Möglichkeit, dass das Halteelement einen Profilbereich aufweist, welcher in das Lagerelement eingebettet ist. Dieser Profilbereich kann beispielsweise in Form einer Hinterschneidung ausgestaltet sein, wodurch das Halteelement, welches mit entsprechenden Gegenrasten versehen ist, an dem Lagerelement haltert.

Weiterhin besteht die nicht näher dargestellte Möglichkeit, dass das Halteelement als zumindest teilweise in das Lagerelement eingebetteter Ring ausgebildet ist, wobei mindestens ein das Lagerelement überragender Bereich gleichzeitig die Gegenrast bildet. Der Ring kann beispielsweise so gestaltet sein, dass er aus einem äußeren, insgesamt im Lagerteil eingebetteten Ringbereich besteht, welcher über Stege mit einem inneren Ringbereich verbunden ist, an dem sich mehrere, einander gegenüberliegende Gegenrasten befinden.

Auch bezüglich des halsförmig ausgebildeten Zwischenbereichs bestehen verschiedene Gestaltungsmöglichkeiten, wobei beispielsweise statt der zwei Führungsflügel 23 nach Fig. 7 ein konischer Bereich vorhanden sein kann, welcher an seinem hinteren Ende mit mehreren, parallel verlaufenden Stegen versehen ist.

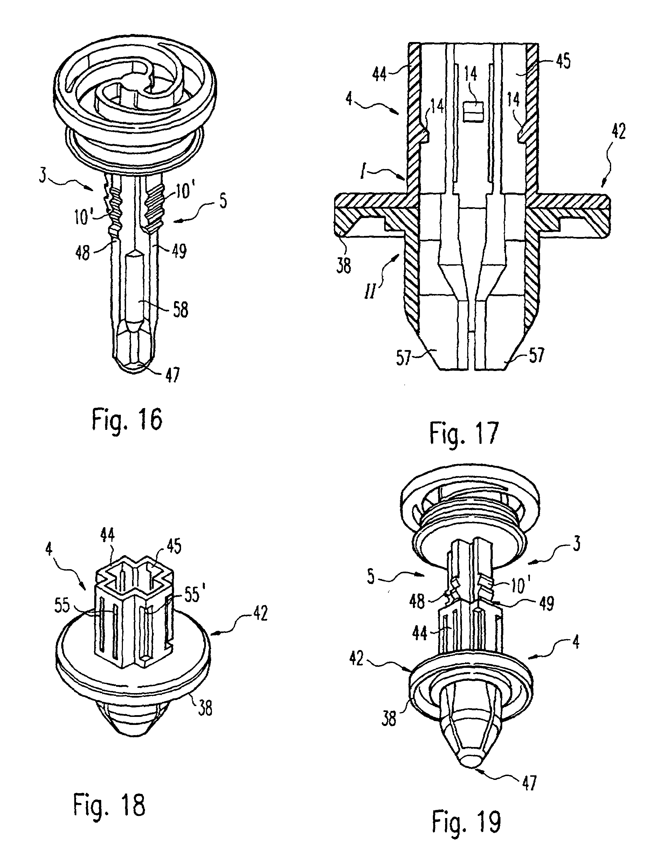

Fig. 16 bis 22 zeigen eine andere Ausführungsform der Erfindung. Hier weist das Oberteil 3 einen Zwischenbereich 5 auf, welcher am Außenumfang längsverlaufende Stege 48 und 49 besitzt. Diese Stege sind stirnseitig mit vorzugsweise mehreren Verrastungselementen 10' nach Fig. 16 versehen. Die Stege 48 und 49 liegen sich einander diagonal gegenüber, wobei die Möglichkeit besteht, insgesamt vier Stege vorzusehen. Die Stege können unterschiedliche Breite aufweisen: beispielsweise besitzen bei der Ausführungsform nach Fig. 16 die Stege 48 eine geringere Breite als die Stege 49. Die Stege 49 gehen unterhalb der Verrastungselemente 10' in eine schmalere Ausführung über. Zwischen den Stegen 48 und 49 befinden sich nach Fig. 16 Profile 58. Weiterhin ist das Oberteil 3 so gestaltet, dass die Stege 48 und 49 endseitig durch einen konisch zulaufenden Einschubbereich 47 begrenzt sind.

Fig. 17 und 18 zeigen das auf die Gestaltung des Oberteils 3 abgestellte Unterteil 4, welches vorzugsweise aus einem Zwei-Komponententeil hergestellt ist. Ein Bereich I besteht aus einem harten Material und weist ein Gehäuse 44 mit einer Ausnehmung 45 und Gegenrasten 14 auf und einen oberen Teil eines Dichtungsflansches 42. Einstückig mit diesem verbunden ist z. B. durch ein Zwei-Komponenten-Spritzverfahren ein aus weicherem Material bestehender Bereich II, welcher mit einem unteren Teil des Dichtflansches 42 und mit mehreren durch Schlitze voneinander getrennten Spreizelementen 57 versehen ist.

Insbesondere aus Fig. 18 geht hervor, dass das Gehäuse 44 mindestens einen mit der Ausnehmung 45 verbundenen längsverlaufenden Schlitz 55 bzw. 55' aufweist. Hierbei sind die Schlitze 55 an mindestens einer Fläche des Gehäuses angeordnet, wohingegen die Schlitze 55' an mindestens einer Seitenwand des Gehäuses 44 verlaufen.

Aus Fig. 18 geht weiterhin hervor, dass das Gehäuse 44 mit seiner Ausnehmung 45 im Querschnitt auf den Zwischenbereich 5 des Oberteils 3 abgestellt ist, d. h. zur Aufnahme der vier Stege 48 und 49 dient.

Fig. 19 zeigt in perspektivischer Ansicht die vormontierte Einheit der Verbindung, bestehend aus Oberteil 3 gemäß Fig. 16 und Unterteil 4 gemäß Fig. 17 und 18.

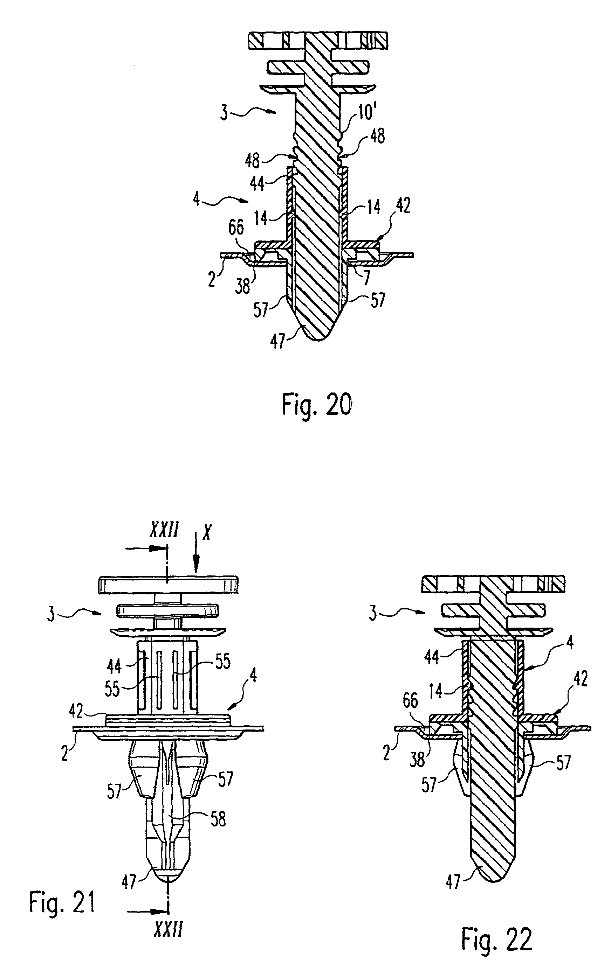

Nach Fig. 20 lässt sich die so vormontierte Einheit in eine Öffnung 7 eines Trägers 2 einsetzen. Beispielsweise kann dieser Träger 2 mit einer Mulde 66 versehen sein. Der aus weicherem Material bestehende untere Bereich des Dichtflansches 42 weist in diesem Zusammenhang vorzugsweise eine umlaufende Dichtlippe 38 nach Fig. 17 auf, welche die Oberseite der Mulde 66 beaufschlagt.

Nachdem die so vormontierte Einheit gemäß Fig. 20 in die Öffnung 7 des Trägers 2 eingesetzt ist, besteht nun die Möglichkeit, durch Druck in Pfeilrichtung X das Oberteil 3 in das Unterteil 4 hineinzudrücken, wobei der konisch zulaufende Einschubbereich 47 des Oberteils 3 durch die Spreizelemente 57 des Unterteils 4 hindurchdrückt und diese gemäß Fig. 21 und 22 hinter der Trägeröffnung 7 spreizt.

Diese Spreizung erfolgt durch das Zusammenwirken der Stege 48 und 49 und der Profile 58. Bei diesem Hineindrücken rasten die in der Ausnehmung 45 des Gehäuses 44 z. B. in verschiedener Höhe angeordneten Gegenrasten 14 in die entsprechenden Verrastungselemente 10' an der Außenseite des Oberteils 3 ein und halten damit die so formschlüssig miteinander verbundene Einheit gemäß Fig. 22 funktionssicher in der Öffnung 7 des Trägers 2.

Durch die umlaufende Dichtlippe 38 des Dichtflansches 42 auf der einen Seite der Trägeröffnung und durch die geöffneten Spreizelemente 57 wird nicht nur die erfindungsgemäße Verbindung einwandfrei an dem Träger 2 gehaltert, sondern es wird auch eine sehr gute Dichtwirkung erzielt.

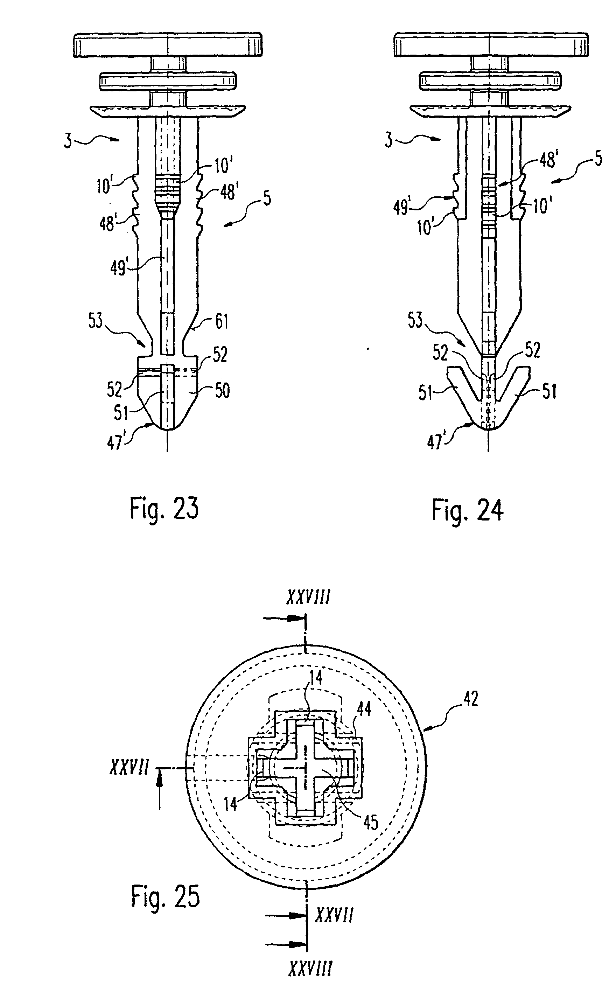

Fig. 23 bis 34 zeigen eine andere Ausführungsform der Erfindung. Hier weist das Oberteils 3 nach Fig. 23 und 24 wiederum diagonal einander gegenüberliegende Stege 48' und 49' mit Verrastungselementen 10' auf. Unterhalb dieser Stege 48' und 49' befindet sich eine Einschnürung 53. An diese Einschnürung 53 grenzen nach Fig. 23 und 24 zwei einander gegenüberliegende federnde Rastnasen 51, deren Basisteil 50 mit diagonal einander gegenüberliegenden Ausnehmungen 52 nach Fig. 23 versehen ist.

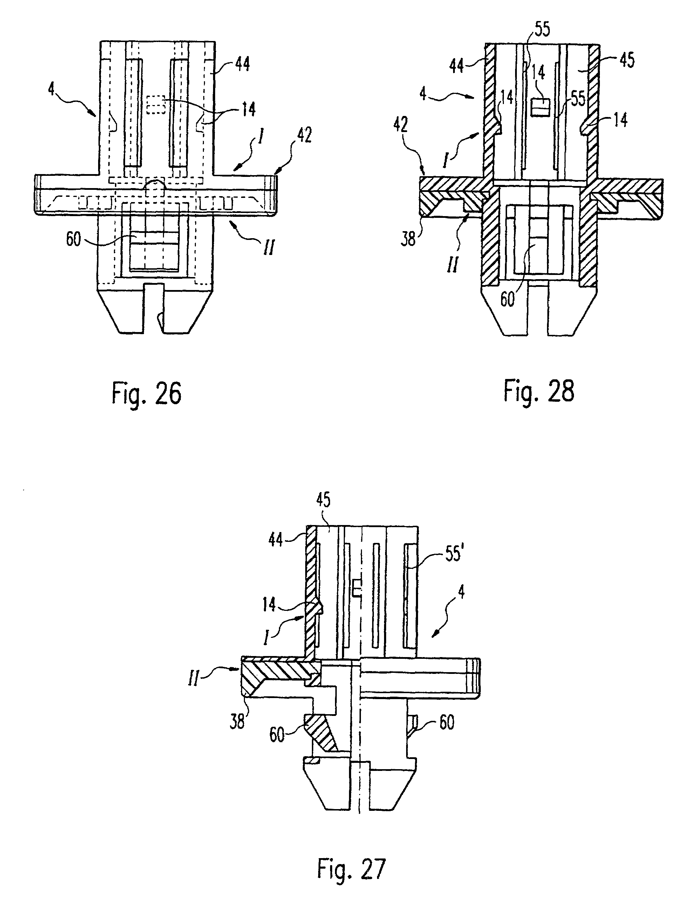

Fig. 25 bis 28 zeigt das auf das Oberteil 3 nach Fig. 23 und 24 abgestellte Unterteil 4. Dieses weist wiederum oberhalb des Dichtflansches 42 ein Gehäuse 44 mit einer Ausnehmung 45 und mit innenseitig, vorzugsweise höhenversetzt angeordneten Gegenrasten 14 nach Fig. 27 und 28 auf. Analog der vorgenannten Ausführungsform ist das Unterteil 4 vorzugsweise wiederum ein Zwei-Komponententeil mit einem Bereich I aus hartem Material und einem Bereich II aus weicherem Material.

Der Bereich II aus weicherem Material bildet den unteren Teil des Dichtflansches 42 und ist wiederum mit einer umlaufenden Dichtlippe 38 versehen.

Der Bereich I aus härterem Material weist eine untere Zone auf, welche sich durch eine Trägeröffnung erstrecken kann und insbesondere nach Fig. 27 gegeneinander versetzte Rasten 60 besitzt.

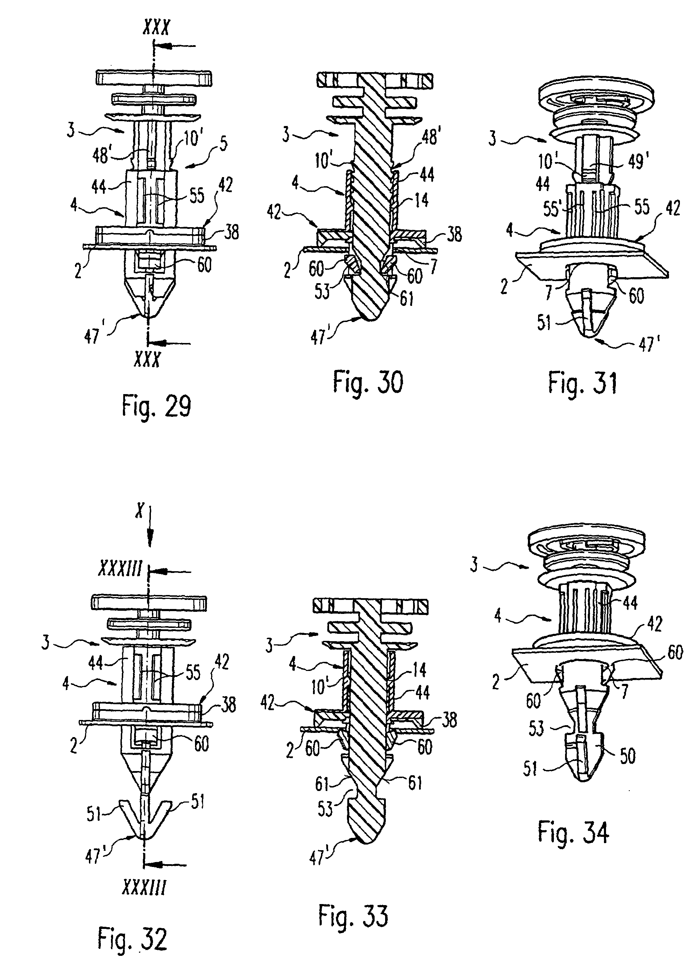

Die aus Oberteil 3 und Unterteil 4 bestehende Einheit kann in vormontierter Form gemäß Fig. 29, 30 und 31 in eine Öffnung 7 eines Trägers 2 eingesetzt werden. Hierbei sind die Rasten 60 des Unterteils 3 noch nicht gespreizt und lagern sich in der Einschnürung 53 im vorderen Teil des Zwischenbereichs 5 ein. Es ergibt sich damit eine vormontierte Einheit.

Wird nun nach Fig. 32 wiederum in Pfeilrichtung X ein Druck auf das Oberteil 3 ausgeübt, so gleiten die Rasten 60 des Unterteils 4 an der schrägen Fläche 61 (Fig. 23, 33) entlang und erfahren insbesondere gemäß Fig. 33 eine Spreizung hinter der Trägeröffnung. Die Rasten 60 liegen damit hinter der Trägeröffnung 7 und halten die gesamte erfindungsgemäße Verbindung, bestehend aus Unterteil 4 und Oberteil 3 funktionssicher an dem Träger 2.

Aus Fig. 32 und 34 geht hervor, dass hier die Rastnasen 51 unterhalb des Trägers 2 frei liegen und beispielsweise als Verbindungselement mit einem anderen nicht näher dargestellten Teil dienen können.

Dadurch, dass sich die Gegenrasten 14 der Ausnehmung 45 des Gehäuses 44 in den entsprechenden Verrastungselementen 10' des Oberteils 3 einlagern, wird eine in sich geschlossene Einheit geschaffen, welche funktionssicher in dem Träger 2 befestigt ist.

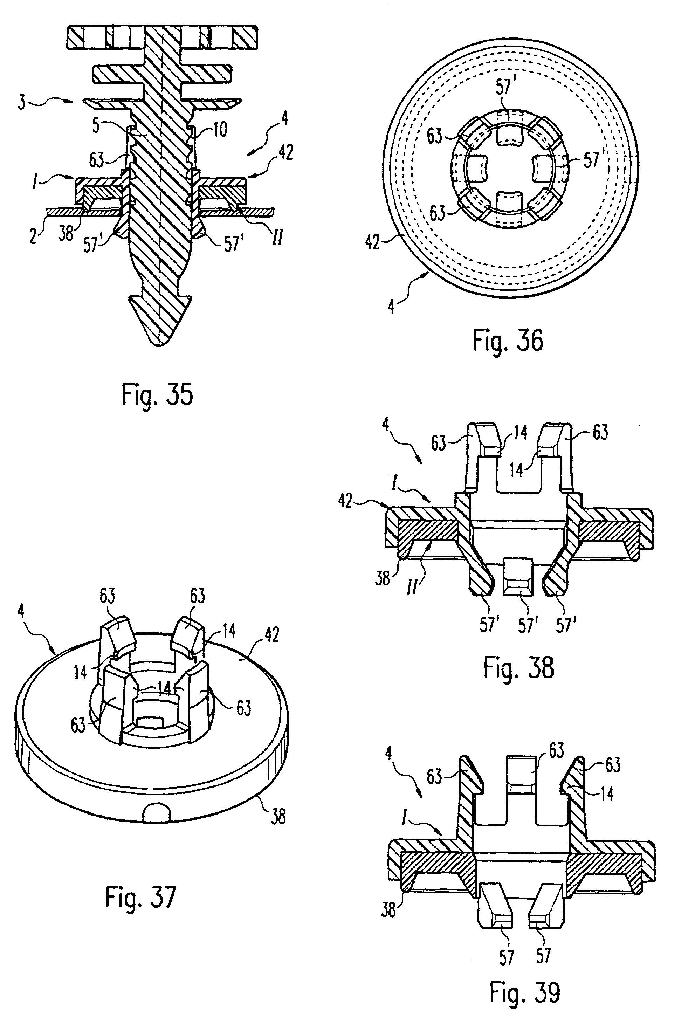

Fig. 35 bis 39 zeigt eine andere Ausführungsform der Erfindung: hier weist das Unterteil 4 insbesondere nach den Fig. 37 bis 39 oberhalb des Dichtungsflansches 42 mehrere, einander gegenüberliegende federnde Stege 63 auf, welche innenseitig mit den Gegenrasten 14 versehen sind.

Das Unterteil 4 ist wiederum im Zwei-Komponenten-Spritzverfahren hergestellt mit einem Bereich I aus härterem Material, sowie einem Bereich II aus weichem Kunststoffmaterial. Aus Fig. 35 geht hervor, dass der Bereich II aus weichem Kunststoffmaterial den unteren Bereich des Dichtflansches 42 bildet und wiederum mit einer Dichtlippe 38 versehen ist.

Der untere Bereich des Unterteils 4 ist insbesondere nach Fig. 38 und 39 mit mehreren, vorzugsweise einander diagonal gegenüberliegenden federnden Spreizelementen 57' versehen. Hierbei können die Stege 63 in Längsachse gegenüber den Spreizelementen 57' versetzt sein.

Das Oberteil 3 kann beispielsweise in der Ausführungsform nach Fig. 3 gestaltet sein und einen zylindrischen Zwischenbereich 5 aufweisen, welcher mit den Verrastungselementen 10 versehen ist.

Das Oberteil 3 und das Unterteil 4 können zunächst als vormontierte Einheit geliefert und in die Trägeröffnung 7 eingesetzt werden. Wird nun auf das Oberteil 3 ein Druck ausgeübt, so spreizt der vordere Teil des Zwischenbereichs 5 die Spreizelemente 57' des Unterteils 4 und weitet diese nach Fig. 35 auf. Damit ist die erfindungsgemäße Verbindung einwandfrei an einem Träger 2 befestigt.

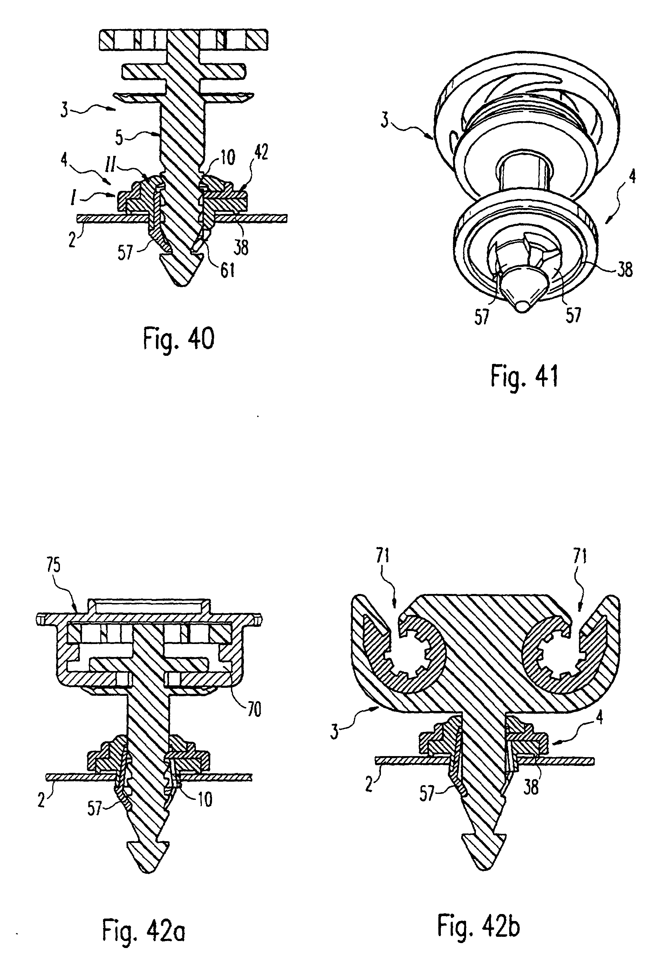

Fig. 40 und 41 stellt eine andere Ausführungsform der Erfindung dar: hier ist das Unterteil 4 zwischen zwei Bereichen I aus härterem Material mit einem Bereich II aus weicherem Material ausgestattet, wobei dieser Bereich II die umlaufende Dichtlippe 38 aufweist. Der Bereich I besitzt unterhalb der Trägeröffnung wiederum Spreizelemente analog den vorgenannten Ausführungsformen. Diese Spreizelemente werden durch die schrägen Flächen 61 der vorderen Zone des Zwischenbereichs 5 nach Einsetzen in eine Öffnung 7 des Trägers 2 gespreizt.

Allen vorgenannten Ausführungsformen der erfindungsgemäßen Verbindung war gemeinsam, dass das Oberteil 3 oberhalb des Zwischenbereichs 5 drei im Abstand voneinander liegende Flansche aufweist. Damit kann gemäß Fig. 42a ein seitlicher Einschub in eine Tasche 70 eines schematisch dargestellten Teils 75 erfolgen. Oberhalb dieses Teils 75 können weitere, nicht näher bezeichnete Elemente angeordnet sein.

Nach Fig. 42b kann das Oberteil 3 statt der drei im Abstand voneinander liegenden Flansche auch zwei im Abstand parallel liegende Rohrhalterungen 71 bekannter Bauform aufweisen.

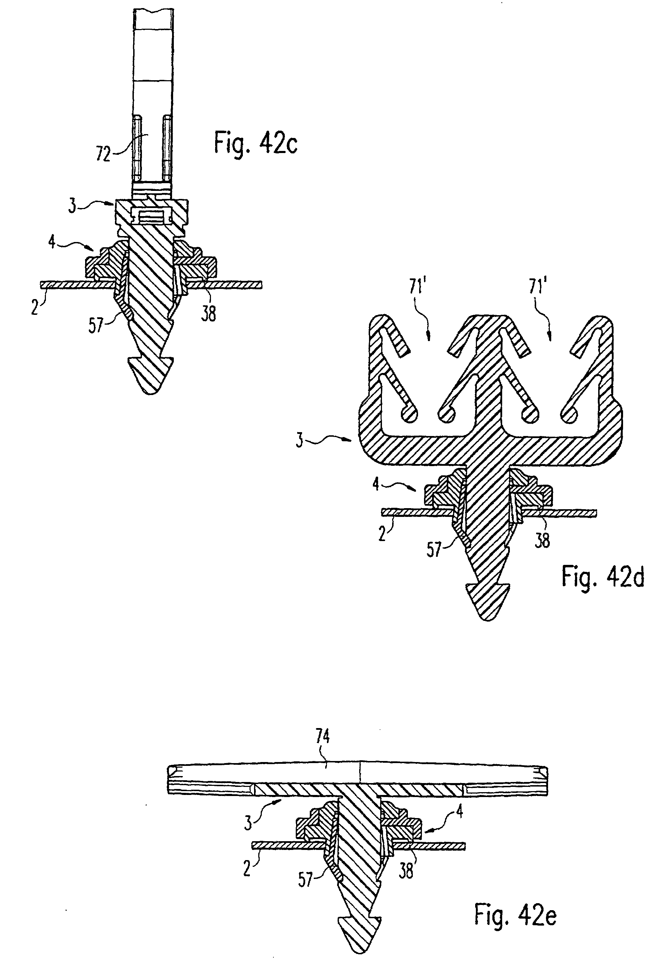

Nach Fig. 42c besteht auch die Möglichkeit, dass das Oberteil 3 mit einem an sich bekannten Umschlingungsband 72 ausgestattet ist, welches zum Umschlingen nicht näher dargestellter Rohrleitungen dient.

Gemäß Fig. 42d können auch anders gestaltete Rohrhalterungen 71' Anwendung finden, welche in an sich bekannter Weise ausgestaltet sind.

Bei der Bauform nach Fig. 42e kann das Oberteil 3 auch eine schalenförmige Längsausnehmung 74 besitzen, um mindestens ein nicht näher dargestelltes Rohr in etwa parallel zur Oberfläche des Trägers 2 zu lagern und beispielweise über nicht näher dargestellte Kabelbänder zu haltern.

Insgesamt ergibt sich eine einfach aufgebaute, jedoch sehr wirkungsvolle Verbindung zwischen einem Träger 2, insbesondere einem Karosserieteil eines Kraftfahrzeuges, und einem Plattenelement, insbesondere einer Türverkleidung, bei welcher bei effektiver Abdichtung der Trägeröffnung ein sehr guter und über einen großen Bereich sich erstreckender Toleranzausgleich in Y-Richtung bezüglich insbesondere eines Kraftfahrzeuges gewährleistet ist.

## Patentansprüche

1. Verbindung (1) zwischen einem Träger (2), insbesondere einem Karosserieteil eines Kraftfahrzeuges, und einem Plattenelement, insbesondere einer Türverkleidung, bestehend aus einem Verbindungsteil mit einem an dem Plattenelement befestigbaren Oberteil (3) und einem mit dem Träger (2) verbindbaren Unterteil (4),
**dadurch gekennzeichnet,**
**dass** zwischen dem Oberteil (3) und dem Unterteil (4) ein mit Verrastungselementen (10) versehener, halsförmig ausgebildeter Zwischenbereich (5, 5') vorgesehen ist,
**dass** ein in eine Trägeröffnung (7), einlagerbares Eingriffsteil (12) vorgesehen ist,
**dass** ein in eine Trägeröffnung (7) einlagerbares Eingriffsteil (12) vorgesehen ist, das in seinem vorderen Bereich der Zwischenbereich (5,5') des Verbindungsteils durchsetzt und hinter der Trägeröffnung (7) spreizt und
**dass** das Eingriffsteil (12) mit mindestens einer in die Verrastungselemente (10) einlagerbaren Gegenrast (14, 14', 14'', 14''') versehen ist.

2. Verbindung nach Anspruch 1, **dadurch gekennzeichnet, dass** das Eingriffsteil (12) ein Zwei-Komponententeil ist und aus einem aus hartem Material bestehenden, mit der Gegenrast (14, 14', 14'', 14''') versehenen Halteelement (16, 16', 16'', 16''') und aus einem aus weicherem Material bestehenden Lagerelement (18, 18', 18'', 18''') gebildet ist.

3. Verbindung nach Anspruch 1 und 2, **dadurch gekennzeichnet, dass** das Halteelement (16) zumindest teilweise in das Lagerelement (18) eingebettet ist (Fig. 4).

4. Verbindung nach Anspruch 3, **dadurch gekennzeichnet, dass** das Halteelement (16) mindestens einen Steg (20) aufweist, welcher in das Lagerelement (18) eingebettet ist.

5. Verbindung nach Anspruch 3 und 4, **dadurch gekennzeichnet, dass** das Halteelement (16) vier einander gegenüberliegende Stege (20) aufweist, an welche oberhalb ein kreuzförmig ausgebildeter, in das Lagerelement (18) eingebetteter Abschlussbereich (21) anschließt, welcher innenseitig mit mindestens zwei Gegenrasten (14) versehen ist (Fig. 5, 6).

6. Verbindung nach Anspruch 5, **dadurch gekennzeichnet, dass** sich die Gegenrasten (14) jeweils in den Bereich zwischen zwei Kreuzbalken (a, b, c, d) befinden.

7. Verbindung nach einem oder mehreren der vorhergehenden Ansprüche, **dadurch gekennzeichnet, dass** der Zwischenbereich (5) stirnseitig als Zylinder (22) ausgebildet ist, welcher sich zwischen mindestens zwei federnden Führungsflügeln (23) und einem die Innenwandung (30) des Eingriffsteils (12) beaufschlagenden Konus (25) befindet.

8. Verbindung nach Anspruch 7, **dadurch gekennzeichnet, dass** die Führungsflügel (23) das Eingriffsteil (12) überragen.

9. Verbindung nach Anspruch 1 und 2, **dadurch gekennzeichnet, dass** das mit den Gegenrasten (14', 14'', 14''') versehene Halteelement (16', 16'', 16''') eine umlaufende, innere Ausnehmung (27; 27') aufweist, in welche das Lagerelement (18', 18'', 18''') eingelagert ist (Fig. 9 bis 15).

10. Verbindung nach Anspruch 9, **dadurch gekennzeichnet, dass** sich oberhalb der Ausnehmung (27, 27') die federnden Gegenrasten (14', 14'', 14''') befinden (Fig. 9 bis 15).

11. Verbindung nach Anspruch 10, **dadurch gekennzeichnet, dass** die Gegenrasten (14', 14'', 14''') an Stegen (40) angeordnet sind (Fig. 9 bis 12, 14, 15).

12. Verbindung nach Anspruch 11, **dadurch gekennzeichnet, dass** sich die Stege (40) diagonal gegenüberliegen.

13. Verbindung nach Anspruch 9, **dadurch gekennzeichnet, dass** das Lagerelement (18', 18'', 18''') aus einem in die Ausnehmung (27; 27') eingelagerten Ring (28) und einem damit verbundenen Spreizelement (29) besteht.

14. Verbindung nach Anspruch 13, **dadurch gekennzeichnet, dass** das Spreizelement (29) ringförmig ausgebildet ist.

15. Verbindung nach Anspruch 14, **dadurch gekennzeichnet, dass** das Spreizelement (29) vor der Endmontage an dem Träger (2) in einer Nut (32) des Zwischenbereichs (5') eingelagert ist (Fig. 10, 11, 13, 15).

16. Verbindung nach Anspruch 9, **dadurch gekennzeichnet, dass** die innere Ausnehmung (27') des Halteelements (16''') umgekehrt U-förmig ausgebildet ist und an der dem Zwischenbereich (5') zugekehrten Seite einen die Trägeröffnung (7) durchdringenden Schenkel (33) aufweist (Fig. 15).

17. Verbindung nach Anspruch 15 und 16, **dadurch gekennzeichnet, dass** die Stirnseite des Schenkels (33) gemeinsam mit dem Spreizelement (29) in die Nut (32) des Zwischenbereichs (5') eingelagert ist.

18. Verbindung nach Anspruch 17, **dadurch gekennzeichnet, dass** der Schenkel (33) in eine umlaufende Ausnehmung (34) des Spreizelements (29) eingelagert ist.

19. Verbindung nach Anspruch 9 und 10, **dadurch gekennzeichnet, dass** an die Nut (32) des Zwischenbereichs (5') stirnseitig ein Führungskonus (36) anschließt.

20. Verbindung nach Anspruch 19, **dadurch gekennzeichnet, dass** der Führungskonus (36) im Querschnitt kreuzförmig ausgebildet ist.

21. Verbindung nach Anspruch 3, **dadurch gekennzeichnet, dass** das Halteelement (16) einen Profilbereich aufweist, welcher in das Lagerelement eingebettet ist.

22. Verbindung nach Anspruch 3, **dadurch gekennzeichnet, dass** das Halteelement (16) als zumindestens teilweise in das Lagerelement eingebetteter Ring ausgebildet ist, wobei mindestens ein das Lagerelement überragender Bereich des Ringes gleichzeitig die Gegenrast bildet.

23. Verbindung nach Anspruch 1, **dadurch gekennzeichnet, dass** das Oberteil (3) einen Zwischenbereich (5) aufweist, welcher am Außenumfang längsverlaufende Stege (48, 49; 48', 49') aufweist, welche stirnseitig mit mindestens einem Verrastungselement (10') versehen sind
und **dass** das Unterteil (4) oberseitig eines Dichtflansches (42) mit einem Gehäuse (44) versehen ist, dessen Ausnehmung (45) auf den Querschnitt der Stege (48, 49; 48', 49') des Oberteils (3) abgestellt und innenseitig mit mindestens einer Gegenrast (14) zum Eingriff in das Verrastungselement (10') des Oberteils (3) versehen ist (Fig. 16 bis 22; Fig. 23 bis 34).

24. Verbindung nach Anspruch 23, **dadurch gekennzeichnet, dass** sich jeweils zwei Stege (48, 49; 48', 49') einander diagonal gegenüberliegen.

25. Verbindung nach Anspruch 23 oder 24, **dadurch gekennzeichnet, dass** die Stege verschiedene Breite aufweisen.

26. Verbindung nach Anspruch 23 bis 25, **dadurch gekennzeichnet, dass** die Stege mit mehreren, hintereinander liegenden Verrastungselementen (10') versehen sind.

27. Verbindung nach einem oder mehreren der Ansprüche 23 bis 26, **dadurch gekennzeichnet, dass** zumindest zwei einander gegenüberliegende Stege (49') unterschiedliche Breiten aufweisen, wobei im Stegbereich größerer Breite die Verrastungselemente (10') angeordnet sind.

28. Verbindung nach den Ansprüchen 23 bis 27, **dadurch gekennzeichnet, dass** die Stege (48, 49; 48', 49') endseitig durch einen konisch zulaufenden Einschubbereich (47; 47') begrenzt sind.

29. Verbindung nach Anspruch 28, **dadurch gekennzeichnet, dass** der Einschubbereich (47') mit mindestens zwei diagonal einander gegenüberliegenden, federnden Rastnasen (51) versehen ist.

30. Verbindung nach Anspruch 29, **dadurch gekennzeichnet, dass** neben den Rastnasen (51) jeweils eine Ausnehmung (52) vorgesehen ist.

31. Verbindung nach einem oder mehreren der Ansprüche 23 bis 30, **dadurch gekennzeichnet, dass** der Zwischenbereich (5) zwischen den Stegen (48', 49') und dem Einschubbereich (47') eine Einschnürung (53) aufweist.

32. Verbindung nach Anspruch 23, **dadurch gekennzeichnet, dass** innerhalb der Ausnehmung (45) des Gehäuses (44) des Unterteils (4) mehrere, höhenmäßig versetzte Gegenrasten (14) angeordnet sind.

33. Verbindung nach Anspruch 23, **dadurch gekennzeichnet, dass** das Gehäuse (44) mindestens einen mit der Ausnehmung (45) verbundenen, längsverlaufenden Schlitz (55, 55') aufweist.

34. Verbindung nach Anspruch 33, **dadurch gekennzeichnet, dass** die Schlitze (55, 55') an mindestens einer Fläche und/oder an mindestens einer Seitenkante des Gehäuses (44) verlaufen.

35. Verbindung nach Anspruch 23, **dadurch gekennzeichnet, dass** das Unterteil (4) ein Zwei-Komponententeil ist und aus einem aus hartem Material bestehenden Bereich (I) mit dem Gehäuse (44) und einem oberen Teil des Dichtflansches (43) und aus einem aus weicherem Material bestehenden Bereich (II) mit einem unteren Teil des Dichtflansches (42) und mit sich durch die Trägeröffnung (7) erstreckenden Spreizelementen (57) gebildet ist, wobei die Spreizelemente (57) durch den Zwischenbereich (5) des Oberteils (3) hinter der Trägeröffnung (7) aufweitbar sind.

36. Verbindung nach Anspruch 35, **dadurch gekennzeichnet, dass** der Zwischenbereich (5) zwischen den Stegen (48, 49) Profile (58) aufweist, welche die Spreizelemente (57) nach Durchführen durch die Trägeröffnung (7) innenseitig beaufschlagen und aufweiten (Fig. 21, 22).

37. Verbindung nach den Ansprüchen 31 und 35, **dadurch gekennzeichnet, dass** der aus weicherem Material bestehende Bereich (II) unterhalb des Dichtflanschs (42) mindestens zwei Rasten (60) aufweist, welche in die Einschnürung (53) des Zwischenbereichs (5) einlagerbar und nach Einschubbewegung des Oberteils (3) in das Unterteil (4) hinter der Trägeröffnung (7) durch schräge Flächen (61) oberhalb der Einschnürung (53) spreizbar sind (Fig. 33).

38. Verbindung nach Anspruch 1, **dadurch gekennzeichnet, dass** das Unterteil (4) oberhalb eines Dichtungsflansches (42) mehrere, einander gegenüberliegende Stege (63) aufweist, welche innenseitig mit den in die Verrastungselemente (10) des Zwischenbereichs (5) eingreifbaren Gegenrasten (14) versehen sind (Fig. 35 bis 39).

39. Verbindung nach Anspruch 38, **dadurch gekennzeichnet, dass** das Unterteil (4) ein Zwei-Komponententeil ist und aus einem aus hartem Material bestehenden Bereich (I) mit den Stegen (63), einem oberen Teil des Dichtungsflansches (42) und sich durch die Trägeröffnung (7) erstreckenden Spreizelementen (57') und aus einem aus weicherem Material bestehenden Bereich (II) mit einem unteren Teil des Dichtungsflansches (42) gebildet ist.

40. Verbindung nach Anspruch 39, **dadurch gekennzeichnet, dass** die Stege (63) in Längsachse gegenüber den Spreizelementen (57) versetzt sind.

41. Verbindung nach einem oder mehreren der vorhergehenden Ansprüche, **dadurch gekennzeichnet, dass** der untere Teil des Dichtflansches (42) am äußeren Umfang eine umlaufende Dichtlippe (38) aufweist.

42. Verbindung nach Anspruch 1 und 2, **dadurch gekennzeichnet, dass** das Unterteil (4) zwischen zwei Bereichen (I) aus hartem Material einen Bereich (II) aus weicherem Material aufweist, welcher mit einer umlaufenden Dichtlippe (38) versehen ist.

43. Verbindung nach einem oder mehreren der vorhergehenden Ansprüche, **dadurch gekennzeichnet, dass** das Oberteil (3) oberhalb des Zwischenbereiches (5) mit mindestens einer Rohrhalterung, einem Kabelklemmbereich und/oder mit Halteelementen versehen ist.

## Claims

1. Connection (1) between a support (2), in particular a body part of a motor vehicle, and a panel element, in particular a door trim panel, comprising a connecting part having an upper part (3), which can be fastened to the panel element, and a lower part (4), which can be connected to the support (2), **characterized in that** an intermediate region (5, 5') which is of neck-shaped design and is provided with latching elements (10) is provided between the upper part (3) and the lower part (4), **in that** an engagement part (12) is provided which can be inserted into a support opening (7), passes in its front region through the intermediate region (5, 5') of the connecting part and expands behind the support opening (7), and **in that** the engagement part (12) is provided with at least one counter-latch (14, 14', 14'', 14''') which can be inserted into the latching elements (10).

2. Connection according to Claim 1, **characterized in that** the engagement part (12) is a two-component part and is formed from a retaining element (16, 16', 16'', 16'''), which consists of hard material and is provided with the counter-latch (14, 14', 14'', 14'''), and of a bearing element (18, 18', 18'', 18'''), which consists of softer material.

3. Connection according to Claims 1 and 2, **characterized in that** the retaining element (16) is at least partially embedded in the bearing element (18) (Figure 4).

4. Connection according to Claim 3, **characterized in that** the retaining element (16) has at least one web (20) which is embedded in the bearing element (18).

5. Connection according to Claims 3 and 4, **characterized in that** the retaining element (16) has four mutually opposite webs (20) which are adjoined above by a closing region (21) which is of cross-shaped design, is embedded in the bearing element (18) and is provided on the inside with at least two counter-latches (14) (Figures 5, 6).

6. Connection according to Claim 5, **characterized in that** the counter-latches (14) are in each case located in the region between two cross-arms (a, b, c, d) .

7. Connection according to one or more of the preceding claims, **characterized in that** the intermediate region (5) is designed on the end side as a cylinder (22) which is located between at least two resilient guide wings (23) and a cone (25) acting upon the inner wall (30) of the engagement part (12).

8. Connection according to Claim 7, **characterized in that** the guide wings (23) protrude over the engagement part (12).

9. Connection according to Claims 1 and 2, **characterized in that** the retaining element (16', 16'', 16'''), which is provided with the counter-latches (14', 14'', 14'''), has a peripheral, inner recess (27; 27') into which the bearing element (18', 18'', 18''') is inserted (Figures 9 to 15).

10. Connection according to Claim 9, **characterized in that** the resilient counter-latches (14', 14'', 14''') are located above the recess (27, 27') (Figures 9 to 15).

11. Connection according to Claim 10, **characterized in that** the counter-latches (14', 14'', 14''') are arranged on webs (40) (Figures 9 to 12, 14, 15).

12. Connection according to Claim 11, **characterized in that** the webs (40) lie diagonally opposite one another.

13. Connection according to Claim 9, **characterized in that** the bearing element (18', 18'', 18''') comprises a ring (28) which is inserted into the recess (27; 27') and an expanding element (29) which is connected to the said ring.

14. Connection according to Claim 13, **characterized in that** the expanding element (29) is of annular design.

15. Connection according to Claim 14, **characterized in that** prior to the final installation on the support (2), the expanding element (29) is inserted in a groove (32) of the intermediate region (5') (Figures 10, 11, 13, 15).

16. Connection according to Claim 9, **characterized in that** the inner recess (27') of the retaining element (16''') is of inverted U-shaped design and on the side which faces the intermediate region (5') has a limb (33) which penetrates the support opening (7) (Figure 15).

17. Connection according to Claims 15 and 16, **characterized in that** the end side of the limb (33) is inserted together with the expanding element (29) into the groove (32) of the intermediate region (5').

18. Connection according to Claim 17, **characterized in that** the limb (33) is inserted into a peripheral recess (34) of the expanding element (29).

19. Connection according to Claims 9 and 10, **characterized in that** on the end side a guide cone (36) adjoins the groove (32) of the intermediate region (5').

20. Connection according to Claim 19, **characterized in that** the guide cone (36) is of cross-shaped design in cross section.

21. Connection according to Claim 3, **characterized in that** the retaining element (16) has a profiled region which is embedded into the bearing element.

22. Connection according to Claim 3, **characterized in that** the retaining element (16) is designed as a ring which is at least partially embedded into the bearing element, in which case at least one region of the ring, which region protrudes over the bearing element, at the same time forms the counter-latch.

23. Connection according to Claim 1, **characterized in that** the upper part (3) has an intermediate region (5) which has webs (48, 49; 48', 49') which run longitudinally on the outer circumference and are provided on the end side with at least one latching element (10'), and **in that** on the upper side of a sealing flange (42) the lower part (4) is provided with a housing (44) whose recess (45) is matched to the cross section of the webs (48, 49; 48', 49') of the upper part (3) and is provided on the inside with at least one counter-latch (14) for engagement in the latching element (10') of the upper part (3) (Figures 16 to 22; Figures 23 to 34).

24. Connection according to Claim 23, **characterized in that** two webs (48, 49; 48', 49') in each case lie diagonally opposite each other.

25. Connection according to Claim 23 or 24, **characterized in that** the webs have different widths.

26. Connection according to Claims 23 to 25, **characterized in that** the webs are provided with a plurality of latching elements (10') lying one behind the other.

27. Connection according to one or more of Claims 23 to 26, **characterized in that** at least two mutually opposite webs (49') have different widths, in which case the latching elements (10') are arranged in the web region of larger width.

28. Connection according to Claims 23 to 27, **characterized in that** the webs (48, 49; 48', 49') are restricted on the end side by a conically tapering insertion region (47; 47').

29. Connection according to Claim 28, **characterized in that** the insertion region (47') is provided with at least two resilient latching lugs (51) lying diagonally opposite one another.

30. Connection according to Claim 29, **characterized in that** a respective recess (52) is provided next to the latching lugs (51).

31. Connection according to one or more of Claims 23 to 30, **characterized in that** the intermediate region (5) has a constriction (53) between the webs (48', 49') and the insertion region (47').

32. Connection according to Claim 23, **characterized in that** a plurality of counter-latches (14) which are offset in terms of height are arranged within the recess (45) of the housing (44) of the lower part (4).

33. Connection according to Claim 23, **characterized in that** the housing (44) has at least one slot (55, 55') which runs longitudinally and is connected to the recess (45).

34. Connection according to Claim 33, **characterized in that** the slots (55, 55') run on at least one surface and/or on at least one side edge of the housing (44).

35. Connection according to Claim 23, **characterized in that** the lower part (4) is a two-component part and is formed from a region (I), which consists of hard material and has the housing (44) and an upper part of the sealing flange (43), and from a region (II), which consists of softer material and has a lower part of the sealing flange (42) and has expanding elements (57) extending through the support opening (7), it being possible for the expanding elements (57) to be widened behind the support opening (7) through the intermediate region (5) of the upper part (3).

36. Connection according to Claim 35, **characterized in that** the intermediate region (5) between the webs (48, 49) has profiles (58) which act upon the inside of the expanding elements (57), after they have passed through the support opening (7), and widen them (Figures 21, 22).

37. Connection according to Claims 31 and 35, **characterized in that** the region (II) consisting of softer material below the sealing flange (42) has at least two latches (60) which can be inserted into the constriction (53) of the intermediate region (5) and after the insertion movement of the upper part (3) into the lower part (4) can be expanded behind the support opening (7) by means of oblique surfaces (61) above the constriction (53) (Figure 33).

38. Connection according to Claim 1, **characterized in that** the lower part (4) above a sealing flange (42) has a plurality of mutually opposite webs (63) which are provided on the inside with the counter-latches (14) which can engage in the latching elements (10) of the intermediate region (5) (Figures 35 to 39).

39. Connection according to Claim 38, **characterized in that** the lower part (4) is a two-component part and is formed from a region (I), which consists of hard material, has the webs (63), an upper part of the sealing flange (42) and expanding elements (57') extending through the support opening (7), and from a region (II), which consists of softer material and has a lower part of the sealing flange (42).

40. Connection according to Claim 39, **characterized in that** the webs (63) are offset in longitudinal axis with respect to the expanding elements (57).

41. Connection according to one or more of the preceding claims, **characterized in that** the lower part of the sealing flange (42) has a peripheral sealing lip (38) on the outer circumference.

42. Connection according to Claims 1 and 2, **characterized in that** the lower part (4) has, between two regions (I) of hard material, a region (II) of softer material which is provided with a circumferential sealing lip (38).

43. Connection according to one or more of the preceding claims, **characterized in that** the upper part (3) above the intermediate region (5) is provided with at least one pipe holder, a cable clamping region and/or with retaining elements.

## Revendications

1. Joint (1) entre un support (2), en particulier une pièce de carrosserie d'un véhicule automobile, et un panneau, en particulier un panneau de garniture pour portes, consistant en une pièce de liaison comprenant une partie supérieure (3) pouvant être fixée au panneau, et une partie inférieure (4) pouvant être reliée au support (2),
**caractérisé par** le fait
qu'une région intermédiaire (5, 5') réalisée en forme de col, munie d'éléments d'encliquetage (10), est prévue entre la partie supérieure (3) et la partie inférieure (4) ;
qu'il est prévu une pièce (12) de venue en prise, qui peut être insérée dans une ouverture (7) du support et est traversée, dans sa zone antérieure, par la région intermédiaire (5, 5') de la pièce de liaison qui se déploie derrière l'ouverture (7) du support ; et
que la pièce (12) de venue en prise est munie d'au moins un cran complémentaire (14, 14', 14'', 14''') pouvant être engagé dans les éléments d'encliquetage (10).

2. Joint selon la revendication 1, **caractérisé par** le fait que la pièce (12) de venue en prise est une pièce à deux composants, et comprend un élément de retenue (16, 16', 16'', 16''') constitué d'un matériau dur et pourvu du cran complémentaire (14, 14', 14'', 14'''), et un élément de portée (18, 18', 18'', 18''') constitué d'un matériau plus tendre.

3. Joint selon les revendications 1 et 2, **caractérisé par** le fait que l'élément de retenue (16) est intégré, au moins partiellement, dans l'élément de portée (18) (figure 4).

4. Joint selon la revendication 3, **caractérisé par** le fait que l'élément de retenue (16) présente au moins une membrure (20) noyée dans l'élément de portée (18).

5. Joint selon les revendications 3 et 4, **caractérisé par** le fait que l'élément de retenue (16) comprend quatre membrures (20) opposées les unes aux autres et auxquelles se rattache, en partie haute, une zone de terminaison (21) de réalisation cruciforme qui est intégrée dans l'élément de portée (18) et est dotée, intérieurement, d'au moins deux crans complémentaires (14) (figures 5, 6).

6. Joint selon la revendication 5, **caractérisé par** le fait que les crans complémentaires (14) se trouvent, à chaque fois, dans la région située entre deux potences (a, b, c, d) de la croix.

7. Joint selon l'une ou plusieurs des revendications précédentes, **caractérisé par** le fait que la région intermédiaire (5) est réalisée, frontalement, sous la forme d'un cylindre (22) interposé entre au moins deux ailes élastiques de guidage (23) et un cône (25) sollicitant la paroi intérieure (30) de la pièce (12) de venue en prise.

8. Joint selon la revendication 7, **caractérisé par** le fait que les ailes de guidage (23) dépassent au-delà de la pièce (12) de venue en prise.

9. Joint selon les revendications 1 et 2, **caractérisé par** le fait que l'élément de retenue (16', 16'', 16'''), muni des crans complémentaires (14', 14'', 14'''), comporte un évidement périphérique intérieur (27 ; 27') dans lequel l'élément de portée (18', 18'', 18''') est inséré (figures 9 à 15).

10. Joint selon la revendication 9, **caractérisé par** le fait que les crans complémentaires élastiques (14', 14'', 14''') se trouvent au-dessus de l'évidement (27, 27') (figures 9 à 15).

11. Joint selon la revendication 10, **caractérisé par** le fait que les crans complémentaires (14', 14", 14''') sont disposés sur des nervures (40) (figures 9 à 12, 14, 15).

12. Joint selon la revendication 11, **caractérisé par** le fait que les nervures (40) sont diagonalement opposées.

13. Joint selon la revendication 9, **caractérisé par** le fait que l'élément de portée (18', 18'', 18''') se compose d'une bague (28) encastrée dans l'évidement (27 ; 27'), et d'un élément déployable (29) relié à cette dernière.

14. Joint selon la revendication 13, **caractérisé par** le fait que l'élément déployable (29) est de réalisation annulaire.

15. Joint selon la revendication 14, **caractérisé par** le fait que l'élément déployable (29) est inséré, avant le montage définitif sur le support (2), dans une rainure (32) de la région intermédiaire (5') (figures 10, 11, 13, 15).

16. Joint selon la revendication 9, **caractérisé par** le fait que l'évidement intérieur (27') de l'élément de retenue (16'') est réalisé en forme de U inversé et présente, sur le côté tourné vers la région intermédiaire (5'), une branche (33) traversant l'ouverture (7) du support (figure 15).

17. Joint selon les revendications 15 et 16, **caractérisé par** le fait que la face extrême de la branche (33) est encastrée, conjointement à l'élément déployable (29), dans la rainure (32) de la région intermédiaire (5').

18. Joint selon la revendication 17, **caractérisé par** le fait que la branche (33) est logée dans un évidement périphérique (34) de l'élément déployable (29).

19. Joint selon les revendications 9 et 10, **caractérisé par** le fait qu'un cône de guidage (36) se rattache frontalement à la rainure (32) de la région intermédiaire (5').

20. Joint selon la revendication 19, **caractérisé par** le fait que le cône de guidage (36) est de réalisation cruciforme en coupe transversale.

21. Joint selon la revendication 3, **caractérisé par** le fait que l'élément de retenue (16) présente une région profilée noyée dans l'élément de portée.

22. Joint selon la revendication 3, **caractérisé par** le fait que l'élément de retenue (16) est réalisé sous la forme d'une bague au moins partiellement encastrée dans l'élément de portée, au moins une zone de ladite bague, dépassant au-delà dudit élément de portée, formant simultanément le cran complémentaire.

23. Joint selon la revendication 1, **caractérisé par** le fait que la partie supérieure (3) comporte une région intermédiaire (5) présentant des membrures (48, 49 ; 48', 49') s'étendant longitudinalement sur le pourtour extérieur et munies, frontalement, d'au moins un élément d'encliquetage (10') ;
et par le fait que la partie inférieure (4) est pourvue, à la face supérieure d'une collerette d'étanchement (42), d'un boîtier (44) dont l'évidement (45) est adapté à la section transversale des membrures (48, 49 ; 48', 49') de la partie supérieure (3) et est doté, intérieurement, d'au moins un cran complémentaire (14) pour la venue en prise dans l'élément d'encliquetage (10') de ladite partie supérieure (3) (figures 16 à 22 ; figures 23 à 34).

24. Joint selon la revendication 23, **caractérisé par** le fait que deux membrures (48, 49 ; 48', 49') respectives sont diagonalement opposées.

25. Joint selon la revendication 23 ou 24, **caractérisé par** le fait que les membrures possèdent une largeur différente.

26. Joint selon les revendications 23 à 25, **caractérisé par** le fait que les membrures sont munies de plusieurs éléments d'encliquetage (10') agencés en succession.

27. Joint selon l'une ou plusieurs des revendications 23 à 26, **caractérisé par** le fait qu'au moins deux membrures (49') mutuellement opposées possèdent des largeurs différentes, les éléments d'encliquetage (10') étant disposés dans la région desdites membrures qui présente une largeur supérieure.

28. Joint selon les revendications 23 à 27, **caractérisé par** le fait que les membrures (48, 49 ; 48', 49') sont délimitées, aux extrémités, par une zone d'insertion (47 ; 47') s'achevant coniquement.

29. Joint selon la revendication 28, **caractérisé par** le fait que la zone d'insertion (47') est dotée d'au moins deux mentonnets élastiques encliquetables (51) diagonalement opposés.

30. Joint selon la revendication 29, **caractérisé par** le fait qu'un évidement (52) respectif est prévu à côté des mentonnets encliquetables (51).

31. Joint selon l'une ou plusieurs des revendications 23 à 30, **caractérisé par** le fait que la région intermédiaire (5) comporte un resserrement (53) entre les membrures (48', 49') et la zone d'insertion (47').

32. Joint selon la revendication 23, **caractérisé par** le fait que plusieurs crans complémentaires (14), décalés dans le sens de la hauteur, sont situés à l'intérieur de l'évidement (45) du boîtier (44) de la partie inférieure (4).

33. Joint selon la revendication 23, **caractérisé par** le fait que le boîtier (44) présente au moins une fente (55, 55') s'étendant longitudinalement et reliée à l'évidement (45).

34. Joint selon la revendication 33, **caractérisé par** le fait que les fentes (55, 55') s'étendent sur au moins une surface et/ou sur au moins une arête latérale du boîtier (44).

35. Joint selon la revendication 23, **caractérisé par** le fait que la partie inférieure (4) est une pièce à deux composants, et comprend une région (I) constituée d'un matériau dur et englobant le boîtier (44), et une partie supérieure de la collerette d'étanchement (42), et une région (II) constituée d'un matériau plus tendre et englobant une partie inférieure de ladite collerette d'étanchement (42), et des éléments déployables (57) traversant l'ouverture (7) du support, lesdits éléments déployables (57) pouvant être déployés derrière ladite ouverture (7) du support à travers la région intermédiaire (5).

36. Joint selon la revendication 35, **caractérisé par** le fait que la région intermédiaire (5) comporte, entre les membrures (48, 49), des profils (58) qui sollicitent et déploient intérieurement les éléments déployables (7) après engagement à travers l'ouverture (7) du support (figures 21, 22).

37. Joint selon les revendications 31 et 35, **caractérisé par** le fait que la région (II) constituée d'un matériau plus tendre possède, au-dessous de la collerette d'étanchement (42), au moins deux ergots (60) qui peuvent pénétrer dans le resserrement (53) de la région intermédiaire (5) et qui, après un mouvement d'insertion de la partie supérieure (3) dans la partie inférieure (4), peuvent être déployés derrière l'ouverture (7) du support, au-dessus dudit resserrement (53), par l'intermédiaire de surfaces inclinées (61) (figure 33).

38. Joint selon la revendication 1, **caractérisé par** le fait que la partie inférieure (4) comporte, au-dessus d'une collerette d'étanchement (42), plusieurs membrures (63) mutuellement opposées et munies, intérieurement, des crans complémentaires (14) pouvant s'encastrer dans les éléments d'encliquetage (10) de la région intermédiaire (5) (figures 35 à 39).

39. Joint selon la revendication 38, **caractérisé par** le fait que la partie inférieure (4) est une pièce à deux composants, et comprend une région (I) constituée d'un matériau dur et englobant les membrures (63), une partie supérieure de la collerette d'étanchement (42) et des éléments déployables (57') traversant l'ouverture (7) du support, et une région (II) constituée d'un matériau plus tendre et englobant une partie inférieure de ladite collerette d'étanchement (42).

40. Joint selon la revendication 39, **caractérisé par** le fait que les membrures (63) sont décalées vis-à-vis des éléments déployables (57) dans le sens de l'axe longitudinal.

41. Joint selon l'une ou plusieurs des revendications précédentes, **caractérisé par** le fait que la partie inférieure de la collerette d'étanchement (42) présente une lèvre périphérique d'étanchement (38) sur le pourtour extérieur.

42. Joint selon les revendications 1 et 2, **caractérisé par** le fait que la partie inférieure (4) est pourvue, entre deux régions (I) en un matériau dur, d'une région (II) en un matériau plus tendre qui présente une lèvre périphérique d'étanchement (38).

43. Joint selon l'une ou plusieurs des revendications précédentes, **caractérisé par** le fait que la partie supérieure (3) comporte, au-dessus de la région intermédiaire (5), au moins un support de tubulures, une zone de coincement de câbles et/ou des éléments de retenue.
